# EUROPÄISCHE PATENTSCHRIFT

(11) **EP 2 807 721 B1**
(45) Veröffentlichungstag und Bekanntmachung des Hinweises auf die Patenterteilung: **06.09.2017**
(21) Anmeldenummer: 13701366.0
(22) Anmeldetag: 21.01.2013
(51) Int. Cl.: H02K 1/04, H02K 15/02, H02K 1/14, H02K 3/32, H02K 5/04, H02K 3/52

(54) **ELEKTROMASCHINE**
ELECTRIC MACHINE
MACHINE ÉLECTRIQUE

(30) Priorität: 23.01.2012 DE 102012001118
(43) Veröffentlichungstag der Anmeldung: 03.12.2014
(73) Patentinhaber: Sew-Eurodrive GmbH & Co. KG, 76646 Bruchsal (DE)
(72) Erfinder: DREHER, Florian, 76646 Bruchsal (DE)
(86) Internationale Anmeldenummer: PCT/EP2013/000172
(87) Internationale Veröffentlichungsnummer: WO 2013/110451

(56) Entgegenhaltungen:
- EP-A1- 1 420 503
- EP-A2- 2 006 977
- EP-A2- 2 006 978
- EP-A2- 2 573 918
- DE-A1-102005 020 952
- DE-A1-102007 017 050
- US-A1- 2002 070 627
- US-A1- 2007 090 720
- US-A1- 2007 145 854
- US-A1- 2012 013 209

## Beschreibung

Die Erfindung betrifft eine Elektromaschine.

Es ist allgemein bekannt, dass Elektromaschinen einen Stator und einen relativ zu diesem drehbar gelagerten Rotor mit Aktivteil aufweisen. Der Stator erzeugt ein oder mehrere Wechselfelder, die sich zu einem Drehfeld überlagern In Wechselwirkung mit einem Erregerfeld des Rotors entsteht ein Drehmoment.

Aus der EP 1 420 503 A1 ist ein Motorgehäuse bekannt.

Aus der US 2012/013209 A1 ist ein Verfahren zum Herstellen kleiner Elektromotoren bekannt.

Aus der EP 2 573 918 A2 ist ein Statorkern eines Stators bekannt.

Aus der EP 2 006 977 A2 ist ein Alternator für eine rotierende elektrische Maschine bekannt.

Aus der US 2002/070627 A1 ist ein Statorsegment bekannt, in welches eine Ringspule eingelegt ist.

Aus der US 2007/145854 A1 ist ein Klauenpolmotor bekannt.

Aus der DE 10 2005 020 952 A1 ist ein Phasenmodul für eine Transversalflussmaschine bekannt.

Aus der DE 10 2007 017050 A1 ist ein Stator für einen Elektromotor bekannt.

Aus der US 2007/090720 A1 ist ein Klauenpolmotor bekannt.

Aus der EP 2 006 978 A2 ist ebenfalls ein Klauenpolmotor bekannt, wobei die Klauen veränderlich.

Der Erfindung liegt daher die Aufgabe zugrunde, einen Elektromaschine kompakt und mit hoher Antriebsleistung auszubilden, wobei die Herstellung einfach ausführbar sein soll.

Erfindungsgemäß wird die Aufgabe bei der Elektromaschine nach den in Anspruch 1 angegebenen Merkmalen gelöst.

Wichtige Merkmale der Erfindung bei der Elektromaschine, insbesondere Transversalflussmaschine, sind, dass der Stator aus einem Stapel von Strangsegmenten zusammengesetzt ist,
wobei jedes Strangsegment zumindest ein Statorsegment und eine Statorwicklung, insbesondere Einzelwicklung, aufweist,
wobei jedes Statorsegment einen ringförmigen Statorsteg aufweist, an welchem Polschuhe angeformt sind, insbesondere welche sich orthogonal zum Steg, also nach radial innen, erstrecken und/oder welche sich auf den Rotor zu erstrecken und/oder welche zwischen Rotor und ringförmigem Statorsteg angeordnet sind,
insbesondere wobei die Polschuhe gleichartig ausgeformt sind,
wobei der Stapel in einem Gehäuseteil aufgenommen ist,
wobei das Gehäuseteil einen axial verlaufenden Kabelkanal aufweist, insbesondere eine axial verlaufende Vertiefung an seiner dem Stapel zugewandten Fläche, insbesondere Innenfläche.
insbesondere wobei das Gehäuseteil kraftschlüssig mit dem Stapel verbunden ist,
insbesondere wobei das Gehäuseteil thermisch aufgeschrumpft oder geklebt ist auf den Stapel. Von Vorteil ist dabei, dass mittels der Aufnahme des Stapels in das Gehäuseteil eine feste Verbindung in einfacher Weise ermöglicht ist. Die Ableitungen und Zuleitungen der Strangsegmente des Stapels werden radial herausführbar und in dem axial verlaufenden Kanal, der als Vertiefung in der Aufnahmebohrung des Gehäuseteils eingeformt und/oder eingearbeitet ist, geführt. Somit ist eine Herausführung und/oder Verschaltung der elektrischen Anschlussleitungen der Statorwicklungen der Strangsegmente in einfacher Weise ausführbar. Dabei wird für das geschützte Herausführen und/oder Verschalten der Anschlussleitungen dasjenige Teil verwendet, welches die Strangsegmente als Stapel zusammenhält und somit auch die gegenseitige Verdrehung der Strangsegmente zueinander fixiert.

Weiter ist vorteilhaft, dass bei der Erfindung kein magnetisches Drehfeld vorgesehen ist. Bei einer vorteilhaften Ausgestaltung weist jedes Statorsegment zwei radial verlaufende, in Umfangsrichtung voneinander mit halbem Polschuhabstand beabstandete Schlitze auf. Von Vorteil ist dabei, dass zwei gleichartige Statorsegmente in axialer Richtung direkt aufeinander stapelbar sind. Somit ist ein kompakter Aufbau mit hoher Leistungsdichte erreichbar. Von Vorteil ist auch, dass die Schlitze durch Kerbung oder andere formende Verfahren herstellbar sind. Somit ist eine kostengünstige Herstellung ermöglicht. Durch die erfindungsgemäße Beabstandung ist ermöglicht, dass trotz der Verdrehung zweier Statorsegmente die Schlitze der beiden Statorsegmente in Deckung bringbar sind. Dabei werden die beiden Statorsegmente um einen dem halben Polschuhabstand entsprechenden Winkel gegeneinander verdreht, so dass ein jeweiliger Polschuh eines ersten Statorsegments in Umfangsrichtung zwischen zwei Polschuhen des anderen Statorsegments desselben Strangsegments angeordnet ist.

Bei einer vorteilhaften Ausgestaltung sind die Schlitze an der dem jeweils anderen Statorsegment des gleichen Strangsegments zugewandten Seite, insbesondere Stirnseite, des Statorsegments angeordnet. Von Vorteil ist dabei, dass die Statorsegmente gleichartig ausführbar sind und somit im Lager des Fertigungswerkes nur eine Sorte von Statorsegmenten bevorratet werden muss. Eine Verwechslung bei der Montage ist somit verhinderbar.

Bei einer vorteilhaften Ausgestaltung sind beim Zusammenfügen der beiden Statorsegmente zu dem jeweiligen Strangsegment die Schlitze in Deckung bringbar zur Bildung eines Durchlasses für die Zuleitung und/oder Ableitung der jeweiligen Statorwicklung. Von Vorteil ist dabei, dass durch die Beabstandung mit dem halben Polschuhabstand die beiden Schlitze in Deckung bringbar sind. Somit ist eine einfache Art der Ausrichtung der beiden Statorsegmente zueinander ermöglicht. Der Schlitz ist dabei in Umfangsrichtung sehr schmal ausgeführt, so dass eine linienhafte Ausführung, also quasi-eindimensionale Ausführung, vorliegt.

Vorzugsweise ist einer der Schlitze derart in Umfangsrichtung angeordnet, dass er mittig zu einem der Polschuhe angeordnet ist, insbesondere also innerhalb der Symmetrieebene des Polschuhs, insbesondere also symmetrisch zwischen zwei Polschuhen. Der Schlitz über der Polschuhmitte des jeweiligen Statorsegmentes ermöglicht aber den symmetrischen Aufbau der Statorsegmente. Erfindungsgemäß weist der, insbesondere jeder, Polschuh eine mit zunehmendem Radialabstand zunehmende Breite in Umfangsrichtung auf,
insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt.

Von Vorteil ist dabei, dass die seitlichen Verbreiterungen seitliche Flussumlenkungen darstellen und somit Sättigung im Polschuh verhinderbar ist. Hierdurch sind die Regelungseigenschaften verbessert und ein hohes Drehmoment erreichbar bei möglichst kompakter Bauweise. Weiterer Vorteil ist auch, dass die mechanische Stabilität des Statorsegments und somit auch des Strangsegments verbessert wird und somit auch die Geräuschentwicklung vermindert und die Schwingungsneigung ebenfalls vermindert wird.

Von Vorteil ist weiter, dass der Wickelraum für die Statorwicklung nicht eingeschränkt ist und somit ein hohes Kupfervolumen bei kompakter Bauweise erreichbar ist. Außerdem ist mittels einer hohen Windungszahl ein entsprechendes Spannungsniveau erreichbar. Die Feldlinien durchlaufen den verbreiterten seitlichen Bereich und somit ist eine Verengung auf ihrem Weg von der luftspaltseitigen Oberfläche des Polschuhs zum Statorsteg hindurch verhindert und es wird dann bei entsprechender Feldstärke keine Sättigung in diesem verengten Bereich bewirkt.

Durch die seitlich nach radial außen verbreiterte Ausformung wird der Polschuh aufgeweitet und somit auch die den Flusslinien bei jedem Radialabstand zur Verfügung stehende Durchdringungsfläche erweitert und somit die Sättigung vermieden.

Daher bietet die Erfindung eine kompakte Lösung, also eine hohe Antriebsleistung pro Bauvolumen der Elektromaschine.

Dabei ist die Umlenkung der Feldlinien von der luftspaltseitigen Seite des Polschuhs, welche in axialer Richtung weiter ausgedehnt ist als in Umfangsrichtung, zum Statorsteg hin, wobei die Übergangsfläche vom Polschuh in den ringförmigen Statorsteg in Umfangsrichtung weiter ausgedehnt ist als in axialer Richtung.

Die erfindungsgemäße Polschuhform, insbesondere also die seitliche Verbreiterung nach radial außen hin, ermöglicht hierdurch verbesserte Regelungseigenschaften und macht ein hohes Drehmoment erreichbar bei möglichst kompakter Bauweise.

Bei einer vorteilhaften Ausgestaltung ist der Polschuh des ersten Statorsegments an seiner vom anderen Statorsegment des Strangsegments abgewandten Seite eben ausgeführt, insbesondere zur Ermöglichung eines möglichst engen und berührenden Aufbau des Stapels der Strangsegmente. Von Vorteil ist dabei, dass die Strangsegmente dicht aneinander stapelbar sind, also ein kompakter Aufbau ermöglicht ist. Erfindungsgemäß ist der zugehörige Verlauf der axialen Breite als Funktion des Radialabstandes aus einem bauchigen und/oder konvexen Abschnitt und einem konkaven Abschnitt zusammengesetzt, wobei der konkave Abschnitt eine mindestens fünfmal kürzere Bogenlänge aufweist als der andere Abschnitt. Von Vorteil ist dabei, dass die Gefahr von Kantenbrüchen reduziert ist und keine Einstiche oder dergleichen notwendig sind. Zur Fertigung der Radien sind entsprechende spanende Werkzeuge verwendbar.

Bei einer vorteilhaften Ausgestaltung weist die luftspaltseitige Oberfläche des Polschuhs einen im Wesentlichen gleichgroßen oder höchstens um 20 % unterschiedlichen Flächenwert auf im Vergleich zur Übergangsfläche zum Statorsteg hin. Von Vorteil ist dabei, dass die Feldlinien keiner Verengung ausgesetzt sind und somit keine Sättigung eintritt.

Bei einer vorteilhaften Ausgestaltung weist der Polschuh einen Polrücken auf,
insbesondere wobei der Polrücken zumindest teilweise zur Statorwicklung und/oder zumindest teilweise zum anderen Statorsegment hin gewandt ist, wobei der Polrücken die zum Rotor hin zugewandte, luftspaltseitige Fläche des Polschuhs mit dem Statorsteg, insbesondere mit der Statorstegoberfläche, verbindet. Bei einer vorteilhaften Ausgestaltung ist der Polschuh derart geformt, dass im Wesentlichen kein Teilbereich des Polschuhs in Sättigung geht, solange der Oberflächenbereich der luftspaltseitigen, insbesondere also der zum Rotor hin gewandten, Seitenfläche des Polschuhs noch nicht in Sättigung geht. Von Vorteil ist dabei, dass keine Verengung für die Feldlinien auftritt und somit der Wirkungsgrad der Elektromaschine möglichst hoch ist. Erfindungsgemäß weist der Polschuh eine mit zunehmendem Radialabstand zunehmende Breite in Umfangsrichtung auf,
insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt. Von Vorteil ist dabei, dass die Feldlinien von der in axialer Richtung breiten luftspaltseitigen Polschuhfläche in die zum Stator hin gewandte Übergangsfläche des Polschuhs, welche in Umfangsrichtung breit ist, umlenkbar sind, ohne dass die Feldlinien durch eine Verengung müssen, der Wickelraum für die Statorwicklung reduziert wird und ohne dass der Luftspalt zwischen den Statorsegmenten eines selben Strangsegments verringert wird. Weiterer Vorteil ist auch, dass die mechanische Stabilität des Statorsegments und somit auch des Strangsegments verbessert wird und somit auch die Geräuschentwicklung vermindert und die Schwingungsneigung ebenfalls vermindert wird.

Bei einer vorteilhaften Ausgestaltung nimmt die axiale Breite des Polschuhs mit zunehmendem Radialabstand ab.

Erfindungsgemäß ist der zugehörige Verlauf zwischen einem ersten und einem zweiten Verlauf angeordnet,
wobei der erste Verlauf eine lineare Funktion des Radialabstandes ist, insbesondere wobei der zum ersten Verlauf gehörige Polrücken eine ebene Fläche ist,
wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist. Von Vorteil ist dabei, dass zwar der erste Verlauf einfach zu fertigen wäre, jedoch wird dadurch das Risiko bewirkt, dass bei Feldstärkewerten, die noch nicht zur Sättigung der luftspaltseitigen Oberfläche des Polschuhs führen, eine zumindest teilweise Sättigung des Polschuhs erreicht wird. Denn der lineare Übergang ist nicht bauchig oder konvex. Somit müssen die Feldlinien durch eine Verengung auf ihrem Weg von der luftspaltseitigen Oberfläche des Polschuhs zum Statorsteg hindurch und bewirken dann bei entsprechender Feldstärke Sättigung in diesem verengten Bereich.

Durch die bauchige Ausformung wird die Verengung erweitert und somit die Sättigung vermieden.

Allerdings ist vorteiligerweise die bauchige Ausformung weniger bauchig als der zweite Verlauf. Denn bei Überschreiten der bauchigen Form des zweiten Verlaufs wird der für die Statorwicklung zur Verfügung stehende Wickelraum vermindert und die Leistung der Elektromaschine reduziert, also kein kompakter Aufbau möglich.

Denn die Erfindung bietet auf diese Weise eine kompakte Lösung, also eine hohe Antriebsleistung pro Bauvolumen der Elektromaschine.

Es soll also Bauchigkeit des Polschuhrückens vorhanden sein, jedoch unterhalb des durch den zweiten Verlauf beschriebenen Grenzverlaufs.

Dabei ist die Umlenkung der Feldlinien von der luftspaltseitigen Seite des Polschuhs, welche in axialer Richtung weiter ausgedehnt ist als in Umfangsrichtung, zum Statorsteg hin, wobei die Übergangsfläche vom Polschuh in den ringförmigen Statorsteg in Umfangsrichtung weiter ausgedehnt ist als in axialer Richtung.

Die beschriebene Polschuhform, insbesondere der Formverlauf des Polschuhrückens, ermöglicht eine im Wesentlichen konstante Flussdichte auf der luftspaltseitigen Polschuhfläche. Hierdurch sind die Regelungseigenschaften verbessert und ein hohes Drehmoment erreichbar bei möglichst kompakter Bauweise.

Weiterer Vorteil ist auch, dass die mechanische Stabilität des Statorsegments und somit auch des Strangsegments verbessert wird und somit auch die Geräuschentwicklung vermindert und die Schwingungsneigung ebenfalls vermindert wird.

Bei einer vorteilhaften Ausgestaltung ist der Polschuh symmetrisch zu einer Symmetrieebene ausgeformt, wobei die Symmetrieebene durch den Schwerpunkt des Polschuhs geht und von der vom Schwerpunkt ausgehenden, radialen Richtung und von der axialen Richtung aufgespannt wird. Bei einer alternativen vorteilhaften Ausgestaltung ist der Polschuh symmetrisch zu einer Symmetrieebene ausgeformt, wobei die Symmetrieebene durch den Schwerpunkt des Polschuhs geht und die Normalenrichtung Tangentialrichtung am Schwerpunkt ist. Von Vorteil ist dabei, dass die Statorsegmente eines Strangsegments gleichartig ausführbar sind und somit nicht zwei Teile sondern nur ein Teil im Lager vorrätig gehalten werden muss.

Bei einer vorteilhaften Ausgestaltung ist eine Kante des Polschuhs verbreitert ausgeführt. Von Vorteil ist dabei, dass eine Reduzierung der Gefahr eines Kantenbruchs erreichbar ist. Weiterer Vorteil ist auch, dass die mechanische Stabilität des Statorsegments und somit auch des Strangsegments verbessert wird und somit auch die Geräuschentwicklung vermindert und die Schwingungsneigung ebenfalls vermindert wird.

Bei einer vorteilhaften Ausgestaltung weicht mit zunehmendem Radialabstand der Flächenwert der Schnittfläche des Polschuhs mit einer ersten Fläche im Wesentlichen dem Flächenwert der luftspaltseitigen, insbesondere also der zum Rotor hin gewandten, Seitenfläche des Polschuhs gleicht oder zumindest um weniger als 10% oder 20% ab,
- wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/oder deren Normalenrichtung die Rotorwellenachse mit dem Schwerpunkt des Polschuhs verbindet
- oder wobei die erste Fläche eine Zylindermantelfläche ist, die zur Rotorwellenachse den jeweiligen Radialabstand aufweist und/oder die parallel zur Rotorwellenachse ausgerichtet ist.

Von Vorteil ist dabei, dass ein möglichst optimale Ausnutzung des Materials erreicht ist, wobei Sättigung unterdrückt und Wickelraum maximal zur Verfügung steht.

Bei einer vorteilhaften Ausgestaltung ist das Statorsegment aus gepresstem oder gesintertem Eisenpulver, insbesondere SMC, ein- oder mehrstückig gefertigt. Von Vorteil ist dabei, dass eine einfache Herstellung ermöglicht ist.

Wichtige Merkmale bei dem Verfahren zum Herstellen einer Elektromaschine sind, dass die Schlitze bei der Herstellung des Stapels von einer Fertigungsmaschine zum Ausrichten, insbesondere zum Einstellen des relativen Verdrehwinkels, der Strangsegmente zueinander detektiert und/oder verwendet werden. Von Vorteil ist dabei, dass eine einfache Fertigung des Stators mit unterschiedlich bestromten Statorwicklungen der Strangsegmente ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Statorsegment 1 eines Elektromotors in Schrägansicht gezeigt.
In der Figur 2 ist ein weiteres gleichartiges Statorsegment 1 des Elektromotors in Schrägansicht gezeigt, wobei eine Statorwicklung 20 als Ringwicklung eingelegt ist radial zwischen die Polschuhe und das Statorjoch 6.
In der Figur 3 ist ein Statorstrangsegment des Elektromotors in Schrägansicht gezeigt, wobei das Statorstrangsegment durch Zusammenfügen der Statorsegmente 1 der Figur 1 und der Figur 2 erzeugt ist.
In der Figur 4 ist das Statorsegment nach Figur 1 mit nach radial innen gerichteten, in Umfangsrichtung regelmäßig voneinander beabstandeten Polschuhen gezeigt, wobei ein vereinfacht dargestellter Polschuh vergrößert dargestellt ist.
In der Figur 5 ist ein Gehäuseteil 52 gezeigt, in welchem ein Stapel von Statorstrangsegmenten nach Figur 3 eingefügt ist, wobei ein axial verlaufender Kabelkanal 50 im Gehäuseteil 52 angeordnet ist.
In der Figur 6 ist ein vergrößerter Ausschnitt der Figur 5 gezeigt.
In der Figur 7 ist ein angeschnittenes Statorsegment 1 gezeigt, wobei ein Polschuh die Schnittfläche 70 aufweist.
In der Figur 8 ist die Schnittfläche 70 des Polschuhs aus Figur 7 dargestellt, wobei statt des vereinfachten, aus linearen Stücken zusammengesetzten Oberflächenverlaufs des Polschuhrückens andere Verläufe (80, 81, 82) dargestellt sind.
In der Figur 9 ist der erfindungsgemäße Verlauf 90 gezeigt, wobei Kanten gerundet ausgeführt sind.

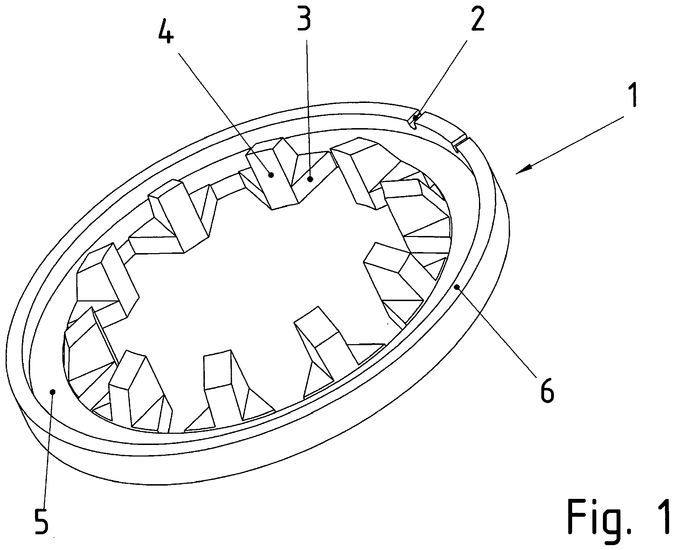

Wie in Figur 1 gezeigt, weist das Statorsegment 1 nach radial innen gerichtete, also zum nicht dargestellten Rotor hin gerichtete Polschuhe auf, die in Umfangsrichtung voneinander regelmäßig beabstandet sind.

Dabei sind die Polschuhe von einem ringförmigen Statorsteg 5 gehalten, der an seinem radial äußeren Endbereich ein axial, also in Rotorwellenachsrichtung, hervor ragenden Statorjoch 6 aufweist.

Die nach radial innen gerichtete Fläche 4 des Polschuhs, also die zum Luftspalt zwischen Stator und Rotor hin gewandte Seite des Polschuhs ist eben oder gekrümmt ausgeführt, wobei bei gekrümmter Ausführung ein Kreisabschnitt mit Radius der Statorinnenbohrung eingesetzt wird.

Das am Rotor vorgesehene und zur Fläche 4 hin gewandte Aktivteil des Rotors ist beispielsweise mit Dauermagneten ausführbar, welche in Umfangsrichtung voneinander regelmäßig beabstandet sind, wobei die Magnetisierungsrichtung in Umfangsrichtung nächstbenachbarter Dauermagnete zueinander entgegengesetzt ausgerichtet ist.

Statt der Dauermagnete sind auch entsprechend angeordnete Elektromagnete mit Erregerwicklung vorsehbar. Weiter alternativ ist als Aktivteil auch ein Kurzschlusskäfig oder ein Reluktanzläufer einsetzbar.

Das Aktivteil, insbesondere die Dauermagnete oder Elektromagnete mit jeweiliger Erregerwicklung, ist im Wesentlichen axial ähnlich oder gleich weit ausgedehnt wie die Polschuhe. Somit ist ein hoher Wirkungsgrad erreichbar.

Von der Fläche 4 ausgehend weist der Übergangsbereich zum Statorsteg 6 eine seitliche Verbreiterung auf, welche sich in und entgegen der Umfangsrichtung erstreckt. Dabei ist die in Umfangsrichtung vorgesehene Breite der Verbreiterung mit zunehmendem Radialabstand größer.

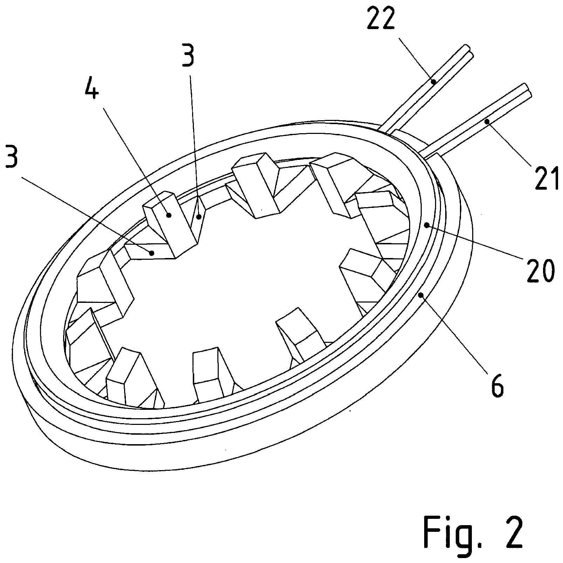

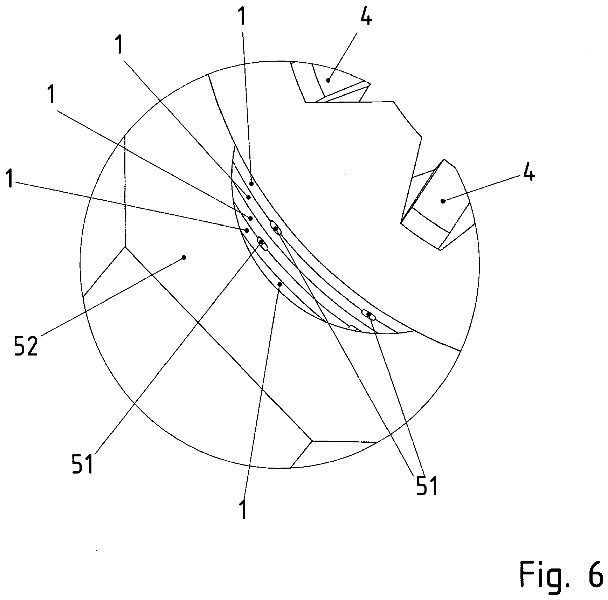

Der Polschuhrücken 42 ist bauchig ausgeführt, wobei zur vereinfachten Darstellung in den Figuren 1, 2, 3, 4, 5, 6, 7 zur Darstellung der bauchigen Form zwei Planflächenabschnitte verwendet sind.

Die seitliche Verbreiterung 3 und der bauchige Verlauf des Polschuhrückens 42 sind aufeinander abgestimmt und zwar derart, dass das an den Flächen 4 eintretende magnetische Feld in den Statorsteg eingeleitet wird, ohne dass Feldlinien im Polschuh konzentriert werden. Der Polschuh weist also eines derartige Ausformung auf, dass zumindest im Wesentlichen kein Teilbereich des Polschuhs in Sättigung geht, solange nicht Sättigung im Oberflächenbereich der Fläche 4 eintritt.

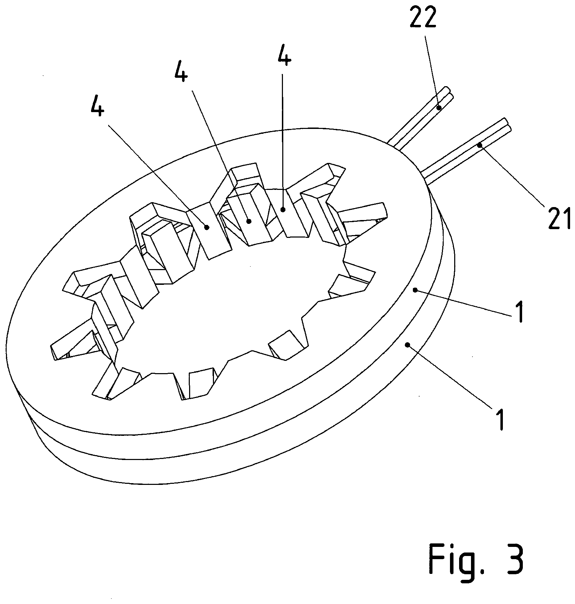

Solange also an der Fläche 4 die magnetische Feldstärke unter dem für Eintreten von Sättigung kritischen Wert bleibt, tritt auch keine Sättigung im Polschuh auf. Der Polschuh weist also genügend viel, die Feldlinien durchleitendes Material auf. Dabei ist allerdings die Polschuhform derart gewählt, dass möglichst viel Wickelraumbereich für die Statorwicklung 20 verbleibt. Außerdem verbleibt auch ein genügend großer Luftspalt zu den Polschuhen des weiteren Statorsegments 1, welches gemäß Figur 3 zusammen mit dem ersten Statorsegment 1 ein Statorstrangsegment bildet.

Wichtig ist hierbei auch, dass die Fläche 4 sich axial derart weit erstreckt, dass sie im Wesentlichen den vom Statorstrangsegment überdeckten axialen Bereich überdeckt. Somit ist eine maximale Ausnutzung gewährleistet.

Da die Fläche 4 weiter in axialer Richtung als in Umfangsrichtung ausgedehnt ist, werden die Feldlinien mittels des Polschuhs zum Übergang zum Statorsteg 5 hin umgelenkt auf eine gleich große Fläche, die aber in Umfangsrichtung weiter ausgedehnt ist als in axialer Richtung. Die Feldlinien werden - Groß gesprochen - sozusagen schraubenförmig umgelenkt. Bei dieser Umlenkung ist aber auf dem Weg der Feldlinien stets genügend Material vorhanden, so dass im Wesentlichen nirgends im Polschuh Sättigung eintritt.

Der Polschuh weist also eine derartige Ausformung aus, dass von radial innen nach radial außen der Polrücken im Wesentlichen in dem Maße axial schmäler wird, in welchem sich der Polschuh seitlich, also in Umfangsrichtung, verbreitert. Dabei wird die exakte Form des Polschuhs derart gewählt, dass eine einfache Fertigung erreichbar ist.

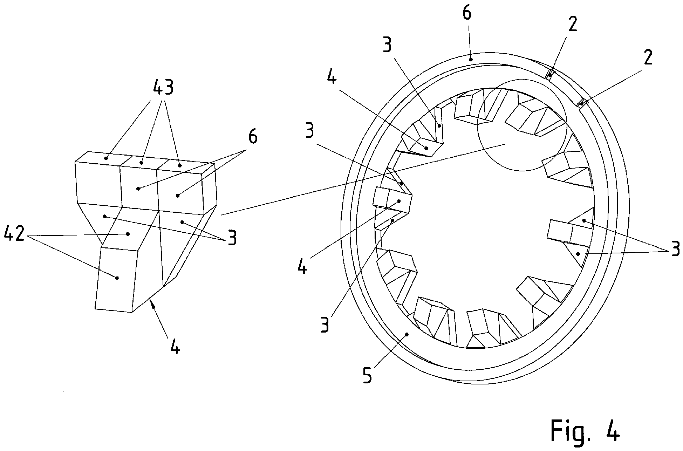

In Figur 4 ist eine Übergangsfläche 42 gezeigt, in welche die Feldlinien von der Fläche 4 ausgehend umgeleitet werden. Die Übergangsfläche 42 ist zwar parallel zur Fläche 4 ausgebildet aber in Umfangsrichtung weiter ausgedehnt als in axialer Richtung, wohingegen die Fläche 4 in axialer Richtung weiter ausgedehnt ist als in Umfangsrichtung.

Das Statorsegment 1 ist aus einem magnetisierbaren Material, wie beispielsweise gepresstes oder gesintertes Eisenpulver, insbesondere SMC, ein- oder mehrstückig ausgeführt.

Wie in Figur 3 gezeigt, sind zwei gleichgeformte Statorsegmente 1 zusammengefügt, wobei eine als Ringwicklung ausgeführte Statorwicklung 20 im zwischen den Statorstegen 5 der Statorsegmente angeordneten Zwischenraum eingelegt ist. Dabei sind die Statorjoche 6 der beiden Statorsegmente 1 zueinander gewandt und berühren sich, so dass das magnetische Feld im Wesentlichen ungestört übertreten kann von einem ersten Statorsegment 1 zu einem zweiten Statorsegment 1.

Da die beiden Statorsegmente 1 zueinander verdreht sind um den halben Umfangswinkel, welcher zwischen zwei in Umfangsrichtung nächstbenachbarten Polschuhen eines jeweiligen Statorsegments 1 vorhanden ist. Somit wechseln sich in Umfangsrichtung die Polschuhe der beiden Statorsegmente 1 ab. In Umfangsrichtung folgt also auf jeden Polschuh eines ersten Statorsegments 1 ein Polschuh des anderen Statorsegments 1.

Jedes Statorsegment 1 weist zwei in Umfangsrichtung voneinander beabstandete Vertiefungen 2 auf. Die Vertiefungen 2 sind vorzugsweise als im Statorjoch 6 radial sich erstreckende Schlitze ausgeführt, insbesondere sind die Schlitze an der dem anderen Statorsegment 1 des Strangsegments zugewandten axialen Stirnseite angeordnet.

Somit kommen die Schlitze der beiden Statorsegmente 1 des Strangsegments bei geeignet gewähltem Verdrehwinkel in Deckung und bilden dann zusammen eine Ausnehmung 51, insbesondere Durchlass für die Ableitung 22 und Zuleitung 21 der Statorwicklung 20.

Da die beiden Schlitze 2 in Umfangsrichtung voneinander um wiederum den halben Umfangswinkel beabstandet sind, welcher zwischen zwei in Umfangsrichtung nächstbenachbarten Polschuhen eines jeweiligen Statorsegments 1 vorhanden ist, kommen die beiden Schlitze 2 eines ersten Statorsegments mit den beiden Schlitzen 2 des anderen Statorsegments 1 in Deckung.

Die Schlitze sind von radial außen am Stapel sichtbar, solange der Stapel noch nicht in das Gehäuseteil eingeführt ist. Somit sind diese Schlitze von einer Fertigungsmaschine mit Bilderfassung erkennbar und zur Einstellung des relativen Verdrehwinkels zwischen den Strangsegmenten verschiedener Phasen, also zwischen den mit verschiedenen Phasenströmen bestromten Strangsegmenten, verwendbar.

Bei einem weiteren erfindungsgemäßen Ausführungsbeispiel ist die Statorwicklung in einem Spulenkörper, insbesondere aus Kunststoff, aufgenommen, wobei der Spulenkörper die Schlitze, also Ausnehmungen oder Vertiefungen (51), zumindest teilweise auskleidet, insbesondere wobei der Spulenkörper mit der von ihm zumindest teilweise umgebenen Statorwicklung in einem Strangsegment aufgenommen ist, insbesondere wobei die Statorwicklung als Ringwicklung ausgeführt ist.

Die Phasenströme sind bei diesem und bei den in den Figuren gezeigten Ausführungsbeispielen beispielsweise Strangströme eines Drehstromsystems.

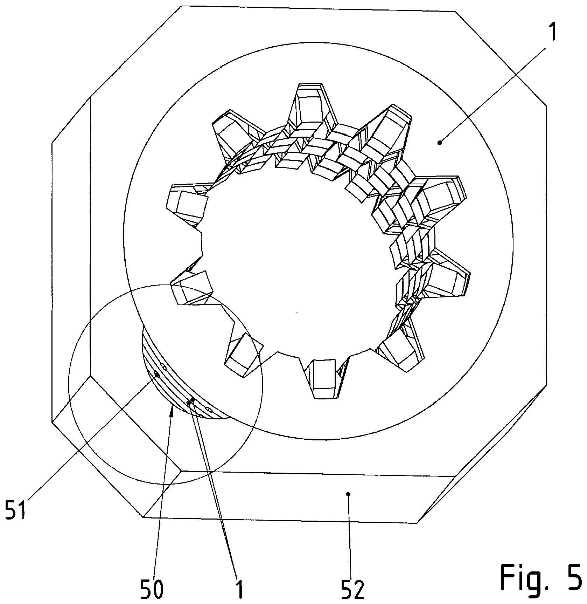

Wie in Figur 5 gezeigt, sind zur Bildung der Elektromaschine mehrere, jeweils gleichartig aus zwei Statorsegmenten und einer Statorwicklung zusammengesetzte Strangsegmente in axialer Richtung hintereinander gestapelt, wobei die Strangsegmente gegeneinander verdreht sind, wenn sie mit verschiedenen Phasenströmen (U, V, W) bestromt werden.

Zu gleichen Phasenströmen gehörende Strangsegmente sind nicht oder weniger stark verdreht als wenn sie mit verschiedenen Phasenströmen (U, V, W) bestromt werden oder nur um ganzzahlige Vielfache des obengenannten Umfangswinkels zwischen den Polschuhen eines jeweiligen Statorsegments 1. Weiter alternativ sind zu gleichen Phasenströmen gehörende Strangsegmente nicht gegeneinander verdreht oder nur um ganzzahlige Vielfache des obengenannten Umfangswinkels zwischen den Polschuhen eines jeweiligen Statorsegments 1.

Die in axialer Richtung aufeinander gestapelt angeordneten Strangsegmente berühren sich, wobei eine dünne elektrisch isolierende Schicht zwischen ihnen eingebracht sein kann. Diese dünne elektrisch isolierende Schicht verbessert den Wirkungsgrad der Maschine. Der Stapel ist in einer Ausnehmung eines den Stapel aufnehmenden Gehäuseteils 52 aufgenommen, wobei das Gehäuseteil 52 vorzugsweise aufgeschrumpft oder geklebt verbunden ist, insbesondere kraftschlüssig verbunden ist. Hierzu wird das Gehäuseteil 52 vor dem Verbinden auf eine höhere Temperatur, insbesondere eine um mindestens 50 Kelvin oder mindestens 100 Kelvin gebracht als der Stapel. Somit ist das Einfügen des Stapels in das Gehäuseteil 52 in einfacher Weise ermöglicht und nach Ausgleich der Temperatur eine kraftschlüssige Verbindung erreicht.

Das Gehäuseteil 52 ist vorzugsweise aus Metall, insbesondere Aluminium oder Stahl, gefertigt.

Die jeweiligen Ableitungen 22 und Zuleitungen 21 werden in dem axial verlaufenden Kabelkanal 50 herausgeführt. Der Kabelkanal 50 ist vorzugsweise als Nut in die Innenwandung der Aufnahmeöffnung zur Aufnahme des Stapels eingearbeitet.

Die Statorsegmente 1 eines jeweiligen Strangsegments berühren sich nur an ihren axialen Stirnseiten im Bereich der axial aufeinander zu hervor ragenden Statorjoche 6. In den übrigen Oberflächenbereichen ist ein Mindestluftspalt zwischen den beiden Statorsegments 1 eingehalten. Statt Luft ist die Statorwicklung 20 und/oder Vergussmasse und/oder Isolationspapier vorgesehen.

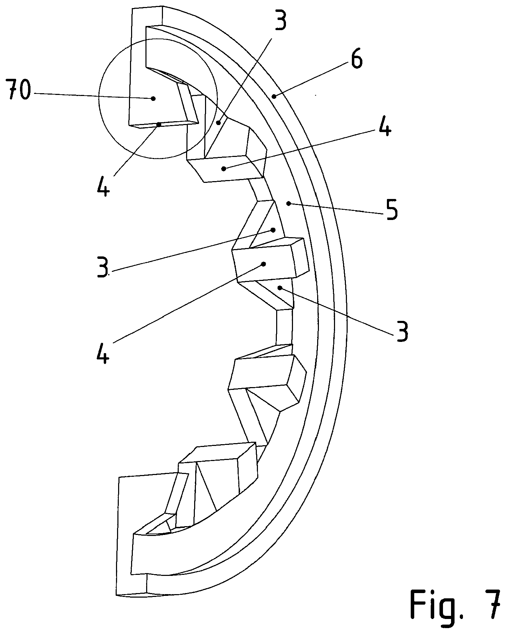

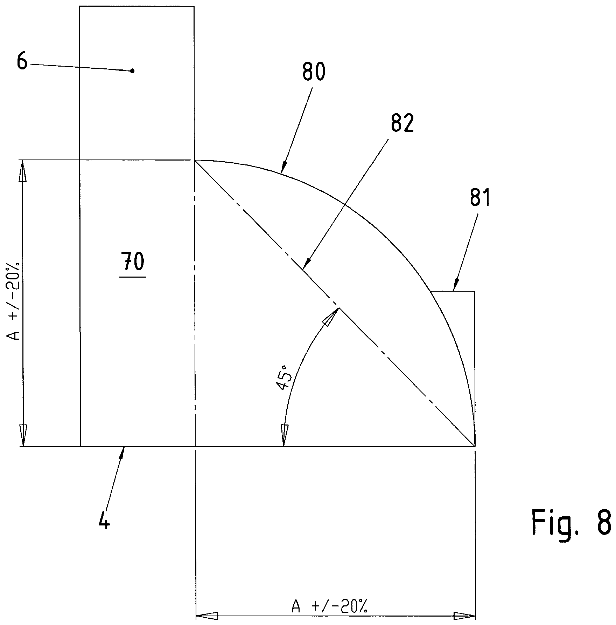

Die Schnittfläche 70 aus Figur 7 ist in Figur 8 erläutert. In Figur 8 ist der Verlauf der Oberfläche des Polschuhrückens 42 erläutert. Hierbei sind je nach gewünschtem Fertigungsaufwand verschiedene Verläufe wählbar.

Der lineare, also ebene Verlauf 82 ist besonders einfach zu fertigen, bewirkt aber schon bei unkritischen Feldstärken eine Sättigung von Teilbereichen des Polschuhs, auch wenn die Fläche 4 noch nicht in Sättigung geht.

Bei dem bauchigen Verlauf 80 folgt der geschnittene Polschuhrücken 42 einem Kreisabschnitt.

Die erfindungsgemäßen Verläufe der Polschuhrücken 42 weisen einen zwischen den Verläufen 80 und 82 liegenden Verlauf auf. Somit ist der erfindungsgemäße Polschuhrücken 42 im Wesentlichen bauchig ausgeführt und die Abnahme des Polschuhrückens bei zunehmendem Radialabstand wird von einer Zunahme der seitlichen Verbreiterung in Umfangsrichtung begleitet.

Da die zwischen Polschuhrücken 42 und Fläche 4 liegende Kante die Gefahr eines Kantenbruchs beinhaltet, ist eine Verdickung gemäß dem Verlauf 81 oder eine Verrundung in diesem Bereich vorteilig.

Der Mittelpunkt des zum Verlauf 80 gehörenden Kreismittelpunkts liegt auf der Ecke des zum Verlauf 82 gehörenden gleichschenkligen rechtwinkligen Dreiecks.

Der Polschuhrücken 42, welcher zum Verlauf 80 gehört, ist also einem Zylinderwandabschnitt entsprechend ausgeführt. Denn in Figur 8 ist nur der mittig angeordnete Schnitt gezeigt ist.

Der Polschuhrücken 42, welcher zum Verlauf 82 gehört, ist also einem ebenen Flächenabschnitt entsprechend ausgeführt. Denn in Figur 8 ist nur der mittig angeordnete Schnitt gezeigt ist.

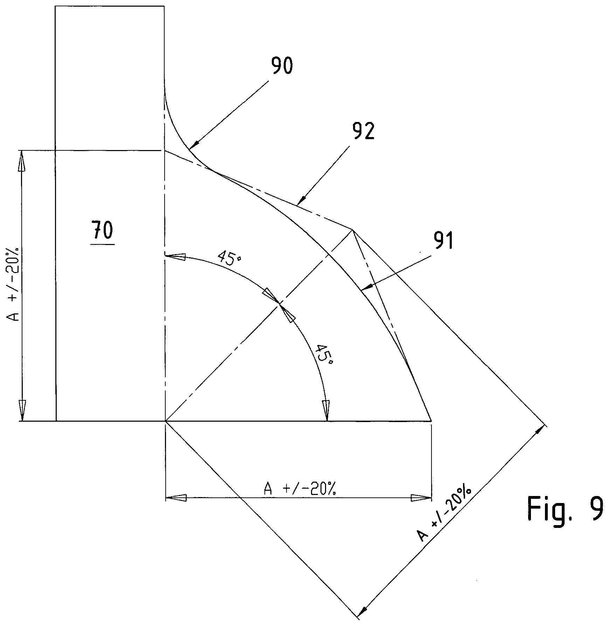

Besonders vorteilhaft ist der in Figur 9 gezeigte Verlauf des Schnitts des Polschuhrückens. Hierbei ist sind beim Verlauf 92 zwei lineare Abschnitte zusammengesetzt, die einen Winkel zwischen 0° und 90°, insbesondere zwischen 15° und 50°, aufweisen. Dabei ist im Schnitt gemäß Figur 9 die Länge der beiden linearen Abschnitte gleich oder um weniger als 30% unterschiedlich.

Da Verrundungen die Gefahr von Kantenbruch reduzieren, ist in Figur 9 ein solcher Verlauf gezeigt. Dieser weist einen ersten Kreisabschnitt 90 und einen zweiten Kreisabschnitt 91 auf, wobei ein stetiger glatter und differenzierbarer Übergang zwischen den Kreisabschnitten 90 und 91 vorhanden ist. Die Länge, also Bogenlänge, des Kreisabschnitts 90 beträgt zwischen 10% und 50%, insbesondere zwischen 15% und 35% , der Länge des Kreisabschnitts 91.

Der Polschuhrücken 42 verläuft entsprechend geschwungen, da in Figur 9 nur der mittig angeordnete Schnitt gezeigt ist.

Zwischen dem jeweiligen Statorsegment 1 und der Statorwicklung 20 ist zur Verbesserung des Isolierabstandes Isolierpapier angeordnet. Alternativ wird die Wicklung mit isolierendem Kunststoff umspritzt.

Der Kreisbogenabschnitt beim Verlauf 90 verläuft konkav; der Kreisbogenabschnitt beim Verlauf 91 verläuft konvex. Der Verlauf 92 ist vereinfacht ausgeführt, also der Polrücken 42 aus zwei ebenen Flächen zusammengesetzt.

Die erfindungsgemäße Elektromaschine ist also auch als Klauenpol-Transversalflussmaschine bezeichenbar.

Bei einem weiteren erfindungsgemäßen Ausführungsbeispiel ist ein Temperatursensor im Bereich der Statorwicklung 20 angeordnet, dessen Anschlussleitungen ebenfalls durch den Durchlass 51 geführt ist.

### Bezugszeichenliste

1 Statorsegment
2 Vertiefung, insbesondere Schlitz
3 Seitenfläche, insbesondere Verbreiterung in Umfangsrichtung
4 Polschuhfläche, insbesondere luftspaltseitige Polschuhfläche, also dem Aktivteil des Rotors zugewandte Fläche des Polschuhs
5 Statorsteg
6 Statorjoch
20 Statorwicklung
21 Zuleitung
22 Ableitung
42 Polschuhrücken, insbesondere bauchig ausgeformt
43 Übergangsfläche
50 Kabelkanal
51 Ausnehmung, insbesondere Durchlass
52 Gehäuseteil
70 Schnittfläche
80 maximal bauchiger Verlauf des Polschuhrückens 42
81 Kantenverdickung
82 minimal bauchiger Verlauf des Polschuhrückens 42, insbesondere linearer, ebener oder gerader Verlauf
90 konkaver kreisabschnittsförmiger Verlauf
91 konvexer kreisabschnittsförmiger Verlauf
92 vereinfachter Verlauf, zusammengesetzt aus zwei ebenen Flächen

## Patentansprüche

1. Elektromaschine, insbesondere Transversalflussmaschine,
**wobei** der Stator aus einem Stapel von Strangsegmenten zusammengesetzt ist,
wobei jedes Strangsegment zumindest ein oder zumindest zwei Statorsegmente (1) und eine Statorwicklung, insbesondere Einzelwicklung, aufweist,
wobei jedes Statorsegment (1) einen ringförmigen Statorsteg (5) aufweist, an welchem Polschuhe angeformt sind, insbesondere welche sich nach radial innen erstrecken und/oder welche sich auf den Rotor zu erstrecken und/oder welche zwischen Rotor und ringförmigem Statorsteg (5) angeordnet sind,
insbesondere wobei die Polschuhe gleichartig ausgeformt sind,
wobei der Stapel in einem Gehäuseteil (52) aufgenommen ist,
wobei das Gehäuseteil (52) einen axial verlaufenden Kabelkanal (50) aufweist,
insbesondere eine axial verlaufende Vertiefung an seiner dem Stapel zugewandten Fläche, insbesondere Innenfläche, insbesondere wobei das Gehäuseteil (52) kraftschlüssig mit dem Stapel verbunden ist, insbesondere wobei das Gehäuseteil (52) thermisch aufgeschrumpft und/oder geklebt ist auf den Stapel, **dadurch gekennzeichnet, dass** der jeweilige Polschuh eine mit zunehmendem Radialabstand von der luftspaltseitigen Fläche (4) des Polschuhs zunehmende Breite in Umfangsrichtung aufweist,
insbesondere wobei mit zunehmendem Radialabstand die Zunahme der Breite in Umfangsrichtung im Wesentlichen in dem Maße, insbesondere umgekehrt proportional, verläuft wie die axiale Breite abnimmt,
wobei der zugehörige Verlauf der axialen Breite als Funktion des Radialabstandes aus einem konvexen Abschnitt und einem konkaven Abschnitt zusammengesetzt ist, wobei der konkave Abschnitt eine mindestens fünfmal kürzere Bogenlänge aufweist als der andere Abschnitt,
wobei der Polschuh derart geformt ist, dass im Wesentlichen kein Teilbereich des Polschuhs in Sättigung geht solange der Oberflächenbereich der luftspaltseitigen, insbesondere also der zum Rotor hin gewandten, Seitenfläche (3) des Polschuhs noch nicht in Sättigung geht,
und/oder wobei
die axiale Breite des Polschuhs mit zunehmendem Radialabstand abnimmt,
wobei der zugehörige Verlauf zwischen einem ersten und einem zweiten Verlauf angeordnet ist,
wobei der erste Verlauf eine lineare Funktion des Radialabstandes ist, insbesondere wobei der zum ersten Verlauf gehörige Polrücken eine ebene Fläche ist,
wobei der zweite Verlauf eine Kreisfunktion, insbesondere Kreisabschnittsfunktion, ist, insbesondere wobei der zum zweiten Verlauf gehörige Polrücken eine Zylinderabschnittsfläche ist.

2. Elektromaschine nach Anspruch 1,
**dadurch gekennzeichnet, dass**
jedes Statorsegment (1) zwei radial verlaufende, in Umfangsrichtung voneinander mit halbem Polschuhabstand beabstandete Schlitze (2) aufweist.

3. Elektromaschine nach mindestens einem der vorangegangenen Ansprüche,
**dadurch gekennzeichnet, dass**
die Schlitze (2) an der dem jeweils anderen Statorsegment (1) des gleichen Strangsegments zugewandten Seite, insbesondere Stirnseite, des Statorsegments (1) angeordnet sind.

4. Elektromaschine nach mindestens einem der vorangegangenen Ansprüche,
**dadurch gekennzeichnet, dass**
beim Zusammenfügen der beiden Statorsegmente (1) zu dem jeweiligen Strangsegment die Schlitze (2) in Deckung bringbar sind zur Bildung eines Durchlasses für die Zuleitung (21) und/oder Ableitung (22) der jeweiligen Statorwicklung.

5. Elektromaschine nach mindestens einem der vorangegangenen Ansprüche,
**dadurch gekennzeichnet, dass**
der Polschuh an seiner vom anderen Statorsegment (1) abgewandten Seite eben ausgeführt ist, insbesondere zur Ermöglichung eines möglichst engen und berührenden Aufbau des Stapels der Strangsegmente.

6. Elektromaschine nach mindestens einem der vorangegangenen Ansprüche,
**dadurch gekennzeichnet, dass**
die luftspaltseitige Oberfläche des Polschuhs einen im Wesentlichen gleichgroßen oder höchstens um 20 % unterschiedlichen Flächenwert aufweist im Vergleich zur Übergangsfläche (43) zum Statorsteg (5) hin,
und/oder dass
der Polschuh einen Polrücken aufweist,
insbesondere wobei der Polrücken zumindest teilweise zur Statorwicklung und/oder zumindest teilweise zum anderen Statorsegment (1) hin gewandt ist,
wobei der Polrücken die zum Rotor hin zugewandte, luftspaltseitige Fläche des Polschuhs mit dem Statorsteg (5), insbesondere mit der Statorstegoberfläche, verbindet.

7. Elektromaschine nach mindestens einem der vorangegangenen Ansprüche,
**dadurch gekennzeichnet, dass**
der Polschuh symmetrisch zu einer Symmetrieebene ausgeformt ist, wobei die Symmetrieebene durch den Schwerpunkt des Polschuhs geht und von der vom Schwerpunkt ausgehenden, radialen Richtung und von der axialen Richtung aufgespannt wird und/oder dass
der Polschuh symmetrisch zu einer Symmetrieebene ausgeformt ist, wobei die Symmetrieebene durch den Schwerpunkt des Polschuhs geht und die Normalenrichtung Tangentialrichtung am Schwerpunkt ist.

8. Elektromaschine nach mindestens einem der vorangegangenen Ansprüche,
**dadurch gekennzeichnet, dass**
eine Kante des Polschuhs verbreitert ausgeführt ist, insbesondere zur Reduzierung der Gefahr eines Kantenbruchs.

9. Elektromaschine nach mindestens einem der vorangegangenen Ansprüche,
**dadurch gekennzeichnet, dass**
mit zunehmendem Radialabstand der Flächenwert der Schnittfläche (70) des Polschuhs mit einer ersten Fläche im Wesentlichen dem Flächenwert der luftspaltseitigen, insbesondere also der zum Rotor hin gewandten, Seitenfläche (3) des Polschuhs gleicht oder zumindest um weniger als 10% oder 20% abweicht,
- wobei die erste Fläche eine Tangentialebene ist, die zur Rotorwellenachse den jeweiligen Radialabstand aufweist und/oder die zur Rotorwellenachse parallel ausgerichtet ist und/oder die den Radialabstand aufweist und/oder die senkrecht zur Symmetrieebene ausgerichtet ist und/oder deren Normalenrichtung die Rotorwellenachse mit dem Schwerpunkt des Polschuhs verbindet
- oder wobei die erste Fläche eine Zylindermantelfläche ist, die zur Rotorwellenachse den jeweiligen Radialabstand aufweist und/oder die parallel zur Rotorwellenachse ausgerichtet ist.

10. Elektromaschine nach mindestens einem der vorangegangenen Ansprüche,
**dadurch gekennzeichnet, dass**
das Statorsegment (1) aus gepresstem oder gesintertem Eisenpulver, insbesondere SMC, gefertigt ist,
und/oder dass
die Statorwicklung mit isolierendem Kunststoff umspritzt ist
und/oder dass
die Statorwicklung in einem Spulenkörper, insbesondere aus Kunststoff, aufgenommen ist,
wobei der Spulenkörper die Schlitze (2) zumindest teilweise auskleidet,
insbesondere wobei der Spulenkörper mit der von ihm zumindest teilweise umgebenen Statorwicklung in einem Strangsegment aufgenommen ist,
insbesondere wobei die Statorwicklung als Ringwicklung ausgeführt ist.

11. Verfahren zum Herstellen einer Elektromaschine nach mindestens einem der vorangegangenen Ansprüche,
**dadurch gekennzeichnet, dass**
die Schlitze (2) bei der Herstellung des Stapels von einer Fertigungsmaschine zum Ausrichten, also zum Einstellen des relativen Verdrehwinkels, der Strangsegmente zueinander detektiert und/oder verwendet werden.

## Claims

1. Electric machine, in particular transversal flux machine,
wherein the stator is composed of a stack of phase segments,
wherein each phase segment has at least one or at least two stator segments (1) and a stator winding, in particular single winding,
wherein each stator segment (1) has an annular stator web (5), on which the pole shoes are integrally formed, in particular which extend radially inwards and/or which extend in the direction of the rotor and/or which are arranged between the rotor and the annular stator web (5),
in particular wherein the pole shoes have the same shape,
wherein the stack is accommodated in a housing component (52),
wherein the housing component (52) has an axially extending cable channel (50),
in particular an axially extending depression on its surface, in particular inner surface, facing the stack,
in particular wherein the housing component (52) is connected to the stack in a force-locking manner,
in particular wherein the housing component (52) is thermally shrunk-on and/or bonded to the stack,
**characterised in that**
the respective pole shoe has a width in the circumferential direction which increases with increasing radial distance from the air-gap-side surface (4) of the pole shoe,
in particular wherein with increasing radial distance, the increase of the width in the circumferential direction is substantially in proportion, in particular in inverse proportion, to the decrease of the axial width,
wherein the associated profile of the axial width as a function of the radial distance is composed of a convex section and a concave section, the concave section having an arc length at least five times shorter than the other section,
wherein the pole shoe is shaped in such a way that substantially no subregion of the pole shoe goes into saturation as long as the surface area of the air-gap-side side surface (3) of the pole shoe, in particular therefore of the side surface (3) of the pole shoe facing the rotor, does not go into saturation yet,
and/or wherein
the axial width of the pole shoe decreases with increasing radial distance,
wherein the associated profile is arranged between a first and a second profile,
wherein the first profile is a linear function of the radial distance, in particular wherein the pole back associated with the first profile is a planar surface,
wherein the second profile is a circular function, in particular circular segment function, in particular wherein the pole back associated with the second profile is a cylindrical section area.

2. Electric machine according to claim 1,
**characterised in that**
each stator segment (1) has two radially extending slots (2), which are set apart from each other by half a pole shoe distance in the circumferential direction.

3. Electric machine according to at least one of the preceding claims,
**characterised in that**
the slots (2) are arranged on the side, in particular front side, of the stator segment (1), which side faces the respective other stator segment (1) of the same phase segment.

4. Electric machine according to at least one of the preceding claims,
**characterised in that**
when joining the two stator segments (1) to form the respective phase segment, the slots (2) are able to be brought into congruence to form a passage for the incoming line (21) and/or the outgoing line (22) of the respective stator winding.

5. Electric machine according to at least one of the preceding claims,
**characterised in that**
the pole shoe is of planar design on its side facing away from the other stator segment (1), in particular in order to allow as far as possible a tight and contacting construction of the stack of the phase segments.

6. Electric machine according to at least one of the preceding claims,
**characterised in that**
the air-gap-side surface of the pole shoe has an area value of substantially the same size or which differs by maximally 20% in comparison with the transition area (43) towards the stator web (5),
and/or **in that**
the pole shoe has a pole back,
in particular wherein the pole back at least partially faces in the direction of the stator winding and/or at least partially faces in the direction of the other stator segment (1),
wherein the pole back connects the air-gap-side surface of the pole shoe facing the rotor to the stator web (5), in particular to the stator web surface.

7. Electric machine according to at least one of the preceding claims,
**characterised in that**
the pole shoe is shaped symmetrically to a plane of symmetry, the plane of symmetry passing through the centre of gravity of the pole shoe and being defined by the radial direction starting from the centre of gravity and by the axial direction,
and/or **in that**
the pole shoe is shaped symmetrically to a plane of symmetry, the plane of symmetry passing through the centre of gravity of the pole shoe and the normal direction being a tangential direction at the centre of gravity.

8. Electric machine according to at least one of the preceding claims,
**characterised in that**
an edge of the pole shoe has a widened design, in particular in order to reduce the risk of an edge fracture.

9. Electric machine according to at least one of the preceding claims,
**characterised in that**
with increasing radial distance, the area value of the sectioned area (70) of the pole shoe with a first area is substantially equal to the area value of the air-gap-side side surface (3) of the pole shoe, in particular therefore to the side surface (3) of the pole shoe facing the rotor, or at least deviates by less than 10% or 20%,
- wherein the first area is a tangential plane which has the respective radial distance to the rotor shaft axis and/or which is aligned parallel to the rotor shaft axis and/or which has the radial distance and/or which is aligned perpendicularly to the plane of symmetry and/or whose normal direction connects the rotor shaft axis to the centre of gravity of the pole shoe,
- or wherein the first area is a cylinder lateral area which has the respective radial distance to the rotor shaft axis and/or which is aligned parallel to the rotor shaft axis.

10. Electric machine according to at least one of the preceding claims,
**characterised in that**
the stator segment (1) is made from pressed or sintered iron powder, in particular SMC,
and/or **in that**
the stator winding is extrusion-coated by insulating plastic
and/or **in that**
the stator winding (20) is accommodated in a coil body, in particular made of plastic,
wherein the coil body at least partially lines the slots (2),
in particular wherein the coil body, with the stator winding at least partially surrounded by it, is accommodated in a phase segment,
in particular wherein the stator winding is configured as a ring winding.

11. Method for producing an electric machine according to at least one of the preceding claims,
**characterised in that**,
during the production of the stack, the slots (2) are detected and/or used by a production machine for aligning, that is to say adjusting the relative angle of rotation of, the phase segments with respect to one another.

## Revendications

1. Machine électrique, en particulier machine à flux transversal,
sachant que le stator est composé d'un empilement de segments de phase,
sachant que chaque segment de phase présente au moins un ou au moins deux segments statoriques (1) et un enroulement statorique, en particulier un enroulement individuel,
sachant que chaque segment statorique (1) comprend un élément jointif statorique annulaire (5) sur lequel sont formées des cornes polaires, en particulier qui s'étendent radialement vers l'intérieur et/ou qui s'étendent en direction du rotor et/ou qui sont disposées entre le rotor et l'élément jointif statorique annulaire (5),
sachant en particulier que les cornes polaires ont une forme similaire,
sachant que l'empilement est reçu dans un élément de boîtier (52),
sachant que l'élément de boîtier (52) présente un caniveau de câbles (50) s'étendant axialement, en particulier un renfoncement s'étendant axialement sur sa face tournée vers l'empilement, en particulier sa face intérieure,
sachant en particulier que l'élément de boîtier (52) est assemblé à force à l'empilement, sachant en particulier que l'élément de boîtier (52) est collé et/ou fretté thermiquement sur l'empilement,
**caractérisée en ce que** la corne polaire respective présente une largeur en direction périphérique qui augmente à mesure qu'augmente la distance radiale de la face (4) côté entrefer de la corne polaire,
sachant en particulier qu'avec l'augmentation de la distance radiale, l'augmentation de la largeur en direction périphérique s'étend sensiblement dans la mesure, en particulier de façon inversement proportionnelle, dont la largeur axiale diminue,
sachant que l'allure correspondante de la largeur axiale en fonction de la distance radiale est composée d'une partie convexe et d'une partie concave,
sachant que la partie concave présente une longueur d'arc au moins cinq fois plus courte que l'autre partie,
sachant que la corne polaire est réalisée d'une forme telle que quasiment aucune région partielle de la corne polaire ne sature tant que la région de surface de la face latérale (3) côté entrefer de la corne polaire, en particulier donc de la face latérale tournée vers le rotor, ne sature pas,
et/ou sachant que la largeur axiale de la corne polaire diminue à mesure que la distance radiale augmente,
sachant que l'allure correspondante se situe entre une première allure et une deuxième allure,
sachant que la première allure est une fonction linéaire de la distance radiale, sachant en particulier que la face arrière polaire correspondant à la première allure est une surface plane,
sachant que la deuxième allure est une fonction circulaire, en particulier une fonction de segment de cercle, sachant en particulier que la face arrière polaire correspondant à la deuxième allure est une surface de section de cylindre.

2. Machine électrique selon la revendication 1, **caractérisée en ce que** chaque segment statorique (1) présente deux fentes (2) s'étendant radialement, distantes l'une de l'autre en direction périphérique de la moitié de la distance de la corne polaire.

3. Machine électrique selon au moins une des revendications précédentes, **caractérisée en ce que** les fentes (2) sont disposées sur le côté, en particulier le côté frontal, du segment statorique (1) qui est tourné vers l'autre segment statorique respectif (1) du même segment de phase.

4. Machine électrique selon au moins une des revendications précédentes, **caractérisée en ce que**, lors de l'assemblage des deux segments statoriques (1) pour former le segment de phase respectif, les fentes (2) peuvent être amenées en coïncidence afin de former un passage pour la ligne d'entrée (21) et/ou la ligne de sortie (22) de l'enroulement statorique respectif.

5. Machine électrique selon au moins une des revendications précédentes, **caractérisée en ce que** la corne polaire est réalisée plane sur son côté éloigné de l'autre segment statorique (1), en particulier afin de permettre une structure la plus resserrée et en contact possible de l'empilement des segments de phase.

6. Machine électrique selon au moins une des revendications précédentes, **caractérisée en ce que** la face supérieure côté entrefer de la corne polaire présente une valeur de surface sensiblement identique ou différente d'au plus 20 % par rapport à la face de transition (43) vers l'élément jointif statorique (5),
et/ou **en ce que** la corne polaire présente une face arrière polaire,
sachant en particulier que la face arrière polaire est tournée au moins partiellement vers l'enroulement statorique et/ou au moins partiellement vers l'autre segment statorique (1),
sachant que la face arrière polaire relie la face côté entrefer, tournée vers le rotor, de la corne polaire à l'élément jointif statorique (5), en particulier à la face supérieure de l'élément jointif statorique.

7. Machine électrique selon au moins une des revendications précédentes, **caractérisée en ce que** la corne polaire est réalisée sous une forme symétrique par rapport à un plan de symétrie, sachant que le plan de symétrie passe par le centre de gravité de la corne polaire et est sous-tendu par la direction radiale partant du centre de gravité et par la direction axiale,
et/ou **en ce que** la corne polaire est réalisée sous une forme symétrique par rapport à un plan de symétrie, sachant que le plan de symétrie passe par le centre de gravité de la corne polaire et que la direction normale est la direction tangentielle au centre de gravité.

8. Machine électrique selon au moins une des revendications précédentes, **caractérisée en ce qu'**une arête de la corne polaire est réalisée élargie, en particulier afin de réduire le risque d'une cassure d'arête.

9. Machine électrique selon au moins une des revendications précédentes, **caractérisée en ce que**, avec l'augmentation de la distance radiale, la valeur de surface de la face d'intersection (70) de la corne polaire avec une première surface devient sensiblement égale à la valeur de surface de la face latérale (3) côté entrefer, donc en particulier de la face latérale tournée vers le rotor, de la corne polaire, ou du moins en diffère de moins de 10% ou 20%,
- sachant que la première surface est un plan tangentiel qui présente la distance radiale respective par rapport à l'axe de l'arbre de rotor et/ou qui est orienté parallèlement à l'axe de l'arbre de rotor et/ou qui présente la distance radiale et/ou qui est orienté perpendiculairement au plan de symétrie et/ou dont la direction normale relie l'axe de l'arbre de rotor au centre de gravité de la corne polaire,
- ou sachant que la première surface est une surface d'enveloppe de cylindre qui présente la distance radiale respective par rapport à l'axe de l'arbre de rotor et/ou qui est orientée parallèlement à l'axe de l'arbre de rotor.

10. Machine électrique selon au moins une des revendications précédentes, **caractérisée en ce que** le segment statorique (1) est fabriqué en poudre de fer comprimée ou frittée, en particulier en SMC,
et/ou **en ce que** l'enroulement statorique est enrobé par projection d'une matière plastique isolante,
et/ou **en ce que** l'enroulement statorique est reçu dans un corps de bobine, en particulier en matière plastique,
sachant que le corps de bobine revêt au moins partiellement les fentes (2),
sachant en particulier que le corps de bobine est reçu dans un segment de phase avec l'enroulement statorique qu'il entoure au moins partiellement,
sachant en particulier que l'enroulement statorique est réalisé sous forme d'enroulement annulaire.

11. Procédé de fabrication d'une machine électrique selon au moins une des revendications précédentes, **caractérisé en ce que** les fentes (2) sont, lors de la fabrication de l'empilement par une machine de production, détectées et/ou utilisées afin d'aligner les segments de phase les uns par rapport aux autres, donc afin de régler leur angle de rotation relatif.
